# EUROPEAN PATENT APPLICATION

(11) **EP 4 108 098 A1**
(43) Date of publication of application: **28.12.2022**
(21) Application number: 20931591.0
(22) Date of filing: 15.05.2020
(51) Int. Cl.: A23L 7/152, A23L 25/00, A23L 33/10, B02C 18/00, B02C 7/18

(54) **METHOD FOR PROCESSING GRAIN TO PRODUCE FOOD PRODUCTS**

(30) Priority: 17.04.2020 RU 2020113892
(71) Applicant: Khismetov, Niaz Zainullovich, Kazan 420054 (RU)
(72) Inventor: Khismetov, Niaz Zainullovich, Kazan 420054 (RU)
(74) Representative: Sach, Greg Robert
(86) International application number: PCT/RU2020/000240
(87) International publication number: WO 2021/211004

(57) **Abstract**

An apparatus and methods for biologically processing grain and nuts to produce functional food products are claimed. Cereal seed grain and nuts are allowed to germinate until sprouts of 1-2 mm appear, and are ground in a bioprocessor using a worm and knives in an aqueous medium in a ratio of 1:2 at a temperature of 20-30°C, resulting in a ground pasty mass which is transferred to a second bioprocessor. In the second bioprocessor, the ground pasty mass is gradually fed with an aqueous solution of silver nanoparticles in a ratio of 1:4 at a temperature of 60-68°C. The entire mass is passed through a disc mill, resulting in a "milk" product solution having antimicrobial properties, and separately - in an oilcake. The "milk" product is separated from the oilcake and sent to a third bioprocessor where the "milk" product is saturated with phytoncides at a temperature of 20-30°C, resulting in a finished product. The inventions allow the production of an independent product and/or a product of varied functional designation having immunostimulating, antibacterial and anti-viral properties.

## Description

### The pertinent art of the invention

This complex group of inventions finds application in the food industry and in the field medicine. It combines a **device** and production **methods** used to obtain proteinvitamin-mineral foods from sprouted grains, nuts (called "Molochko" in the context of this invention) which can be employed both as independent products and as a basis for products serving various functional purposes featuring immune stimulating, antibacterial and antiviral properties for nutrition and prevention of diseases and infections (including coronavirus). Products can be of various consistencies and shapes containing different elements.

### Background of the invention

There are known methods of preparation of various biological products (soy milk, oat milk, mixtures) which involve cleaning seeds of foreign impurities, washing them in clean water and crushing them. There are drinks produced through grinding various crops and having them mixed with water or through cooking which results in considerable losses of nutrients. The method which is the closest to the invention in question is that of obtaining foods out of vegetable feedstock which involves grinding vegetable feedstock, water extraction, heat treatment and homogenization with purified kernel of pine nuts used as vegetable feedstock. Grinding and water extraction procedures are performed simultaneously at a ratio of: purified kernels of pine nuts and water - 1:9-8: 1 while the processes of homogenization and heat treatment are combined and carried out in a homogenizer at temperatures of 65-80 °C for 0.25-20 minutes at a pressure not lower than 5 MPa (RU 2031587 C1).

The shortcoming of this method lies in the fact that the fairly complex manufacturing technology still yields products of insufficient biological value.

In the case of our invention. this engineering challenge is solved by a combination of a **device and a number of methods** put to use in order to obtain **foods** for general and functional purposes.

The technical result of our invention is the development of a special device comprised of three units ("Bioprocessors"), and methods for obtaining nuts of the food product "Molochko" from sprouted grains as an independent primary product, and as a basis for products of various functional purposes (biologically active supplements).

The product "Molochko" carries high-quality proteins (amino acids, peptides, nucleotides, nucleic acids), fatty acids, carbohydrates, vitamins, minerals.

The next stage involves a treatment of the primary product "Molochko" with an aqueous solution of a bactericidal substance (silver nanoparticles) which yields the secondary product. The resulting secondary product is then mixed with organic natural elements (phytoncides). The amino acids of the grain are coated with compounds of phytoncides. This in turn yields a third product with additional functional properties.

This food product can find application in general nutrition and prevention of various diseases and infections (including coronavirus) as it features additional immunomodulatory, antioxidant, antiviral and other functional properties (the name of this product is abbreviated to KhNZ). Functional products can be of different consistencies and shapes and they can be prepared to carry various natural elements.

The KhNZ product renews diseased cells which sees them replaced with healthy ones which comes about owing to organic grains whose chemical composition is not distorted, nature-balanced and identical to that of the human body.

### Invention disclosure

This group of inventions consists of **the "Device"** and **the "Methods"** used to obtain **the food "product".**
1. **The first technical result:** structural design **of the device** and the functional purpose of the parts and components which make up the device are as follows: the **device** has three units ("bioprocessors") mounted on the same frame arranged sequentially one after another, in a single row or in the form of the Russian letter "Γ", or differently.

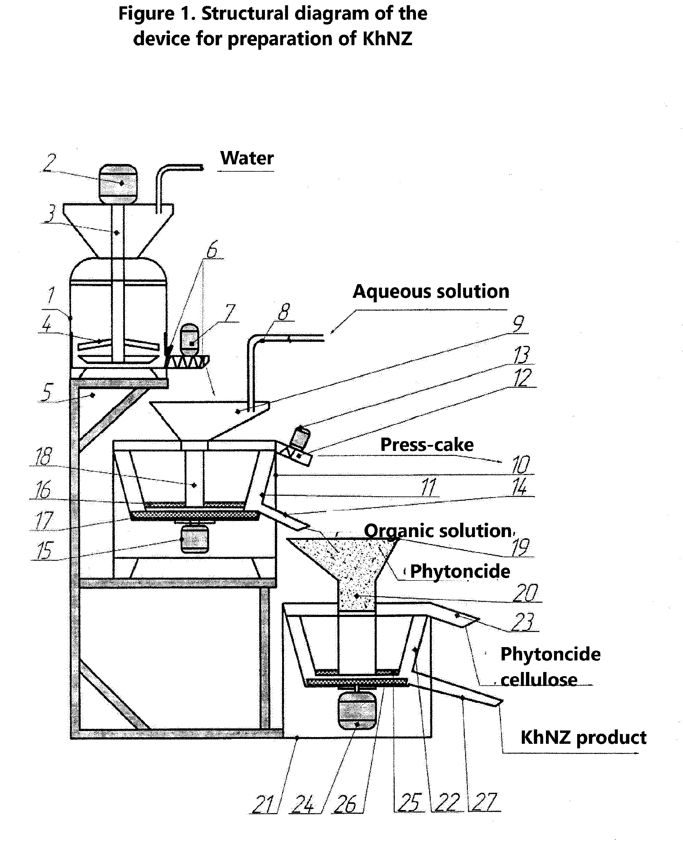

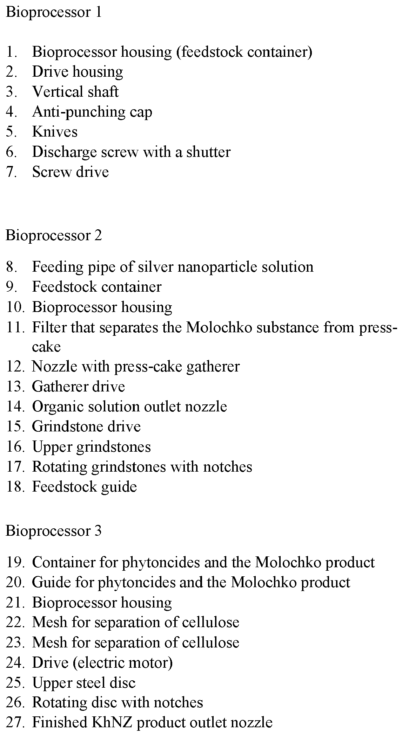

The substance of the invention is explained by the structural diagram of the device given in Figure 1.
1. Bioprocessor 1 which features a screw serves the function of grinding sprouted grains, nuts or other feedstock in an aqueous medium by means of knives which yields paste-like mass.

The mechanism is made of the following components:
Capacity (L), actuator mechanism (2), vertical shaft (3), anti-punching cap (4), knives (5), discharge screw with a shutter (6), electric drive (?).

The screw moves the crushed mass to Bioprocessor 2 which is located below.

2. Bioprocessor 2 designed to open protein membranes. The resulting paste-like mass is passed through grindstones. An aqueous solution of silver nanoparticles in a ratio of 1:4 is portioned to the mass. This produces the organic solution "Molochko" featuring antimicrobial properties with press-cake **also being obtained separately.**

Bioprocessor 2 separates the Molochko substance from press-cake with a collector transferring the press-cake to a container and the Molochko substance being drained into a separate container.

Bioprocessor 2 is comprised of a feed stock (9), housing (10), pipe for supply of silver nanoparticles aqueous solution (8), a filter (11), a nozzle (12), drive of the gathering device (13), a nozzle (14), a grindstone drive (15),
upper grindstones (16), rotating grindstone with notches (17), feedstock guides (18).

3. A pump feeds the Molochko substance to Bioprocessor 3 which is equipped with a disc unit. Natural elements (for instance, phytoncide - garlic) are fed in addition to the Molochko substance with protein particles (amino acids) being enveloped by particles of natural elements as they pass through the channel discs.

Bioprocessor No. 3 is comprised of the following components: a container for collection of Molochko substance (19), a guide (20), a housing (21), a mesh (22), a nozzle (23), a drive (24), a steel upper disc (25), a rotating disc with notches (26), nozzle for finished products (2).

The device is made of food-grade stainless steel designed for food production.

The medium of the working parts of the device is organic solutions and acidic fats. The purpose of the Device comprised of three bioprocessors is that of obtaining functional food products with defined properties.

### 11. Second technical result: methods of implementation

The device is able to produce organic products in several **ways:** grinding, treatment with inorganic antibacterial substances, mixing and coating of proteins with natural elements (phytoncides).

It works as follows:
The device is comprised of three bioprocessors. It relies upon a number of **methods.**
1. Bioprocessor 1 uses the method of cutting and transferring crushed mass under pressure to the Bioprocessor 2.
   Bioprocessor 1" uses knives to cut sprouted grain while nuts with water are crushed in a ratio of 1:2 at a temperature of 20-30 °C which produces crushed organic paste-like mass that is fed by screws to Bioprocessor 2 located below.
2. Bioprocessor 2 relies upon on the **method** of opening protein membranes by means of rotating stones with an aqueous solution of an antiseptic substance (silver nanoparticles) added. This produces an organic solution with nutrients with starch converted into glucose and maltose, fats into fatty acids, and proteins into amino acids. Bioprocessor 2 feeds water or an aqueous solution of an antiseptic substance - silver nanoparticles - to crushed paste-like feedstock portionwise in a ratio of
   1:4 at a temperature of 60 - 68 °C. The whole mass passes through the grindstones. This results in a synthesis of vitamins, auxins, phytoharmones which forms the Molochko organic solution with antimicrobial properties. The press-cake comes out (fiber and other substances) separately.
3. Bioprocessor 3 employs a **method** via which protein particles (amino acids) of the Molochko organic solution are coated with natural elements (phytoncides) in a defined ratio which depends on the specific element at a temperature of 20-30 °C.

The modus of operandi of Bioprocessor 3 which obtains the KhNZ product consists in coating the particles of the organic solution with natural elements (phytoncides) under the mechanical influences of discs which rotate against each other in a horizontal position at a defined temperature and pressure in the vessel and a given frequency of rotation. This produces the **Product.**

**111. Third technical result:** the organic Product is obtained via the device combined with the above-mentioned methods. The resulting product can be used as an independent product or it can serve as the basis for products of various functional purposes.

The product can be of various consistencies. It is a **composition of the following ingredients:** sprouted grain, nuts; water or an aqueous solution of antiseptic substances (silver nanoparticles) and natural elements (phytoncides).

### Content and structure of the composition and ingredients.

### 1. Structure and content of feedstock.

Feedstock includes sprouted grains and nuts which are treated by the device. The resulting product is called "Molochko". Then an aqueous solution of silver nanoparticles or other substances are used to preserve the product. As a result, an organic solution with an inorganic preservative is obtained. At this point, the protein organic substances in the product are coated with natural elements of a defined purpose (phytoncide - garlic).

Grains feature has all the elements that are necessary for the human body to function well. They are also easily digestible and put no strain on the human body. As grains germinate, proteins split into amino acids which are partially digested and partially decomposed further into nucleotides, which, in turn, decompose into a base which lies in the nature of genes thus healing human genes. A diseased gene, if the base is replaced owing to essential proteins contained in grains, can become healthy.

Vegetable proteins are molecular machines which serve as building blocks and "weapons" of living cells. Proteins are responsible for genetic information. Proteins reinforce membranes while also contributing to the structure of cells and tissues.

As grains germinate, starch and fats decompose. Sprouted wheat has its content of vitamins C and _{B6} upon germination going up by 5 times, vitamin _{B1} - by 1.5 times, vitamin B2 - by 13.5 times, folic acid - by 4 times, vitamin E - by 3 times. Sprouted grains carry large quantities of chromium, lithium, calcium, iron [2,8].

The process of grain germination sees a sharp increase in the concentration of natural antibiotics and growth stimulants [8].

This generates a "bank" of elementary useful micro-formations required for the human body to develop properly. Enzymes form in cells. These enzymes ensure that cells keep functioning properly and repair "malfunctions" when they arise. They help remove or restore defective cells, molecules and atoms. It only takes healthy and high-quality material in the right amount and in the right proportions to restore damaged DNA.

The device proposed in this paper grinds sprouted grain with water which makes the membranes (pouches) of proteins rupture while at the same time pushing amino acids (a group of nucleic acids and amino acids (peptides, nucleotides)) with minerals, fatty acids and vitamins out of the pouch.

This method produces the organic high-molecular solution "Molochko", live food which is a source of vital energy containing essential amino acids that heal the genes in the human body.

The Molochko product represents the perfect fuel for the human body as it has absorbed solar energy. It is a battery of "solar vitamins", a fuel which burns up everything that has no place in the body also making the body able to fight infections and external destructive forces.

The Molochko product is most beneficial when a person is in an environment contaminated by an unknown infection. In such cases, one's intake of Molochko should last a while. Our studies have concluded that the Molochko solution which contains silver nanoparticles and phytoncide particles is a useful and safe food. The safety of this product has been confirmed by a research protocol issued by a state specialized laboratory [12]. The product also boasts antiseptic and antiviral properties. This product is in fact akin to a medicine, one which has no match in nature in terms of energy strength, efficiency and its variety of biochemical transformations which in essence clears out virtually all waste from the body whilst transforming defective cells into new, hardened and full-fledged ones.

The Molochko product is a high-molecular solution which carries silver nanoparticles and phytoncides stimulating production of red blood cells, replenishes the human body with nutrients while destroying viruses. The human body distributes the energy of the immune system directing white blood cells (corpuscles which fight bacteria and viruses).

The composition of a grain is identical to that of the human body. The grain is a vital force which feeds the human body with healing live energy, sends information to initiate recovery, cleanse and harmonize the energy of our body. The grain itself does not cure, but it is involved in all processes and various reactions of the body which heal and restore the whole body. Intake of the Molochko product help the body save considerable amounts of energy (normally used to break down animal proteins, carbohydrates and to produce vitamins and amino acids). This means the energy of the body is redirected to restore cells and genes. Signals are directed to ensure a correct distribution of proteins, vitamins, minerals, sugars, fatty acids which are critical to the processes in the human body.

### 2. Structure and content of silver nanoparticles.

When the human body is combatting an unknown infection, regardless of the healthy food the person may be consuming at that moment, proteins can get infected as the product enters the oral cavity making the consumed food only serve to boost the infection in the human body.

The Molochko product (especially amino acids) are treated with an antiviral and bactericidal substance in order to keep it sheltered from infection.

Well-known is the method of purification and disinfection of water found in Russian Federation patent No. 2125973, 1997 which uses chemical reagents such as chlorine, ozone, acid, alkali, fluorine for disinfection of water. A certain amount of dissolved reagent is injected into circulating water in order to suppress microflora to desired parameters.

While this method does disinfect water, it also produces a large number of volatile organohalogen compounds with carcinogenic properties which rule out the possibility of using it for fine purification of potable water.

Available also is another method used to clean and disinfect water set out Russian Federation patent No. 2098359, 1996, which invovles treatment of water with chlorinebased oxidants and coagulants, subsequent settling and filtration. As water is treated, solutions containing hypochlorous acid as an oxidizer and aluminum chlorides are introduced into it.

Though this method purifies and disinfects water, the purified water is still highly acid which corrodes machinery and piping which means that this method cannot be used for fine purification of potable water nor can it be used for the Molochko product which is an organic solution.

Our study of a number of preservatives has identified the most acceptable option which is predicated on the protection of the product with an aqueous solution of silver nanoparticles (patent 2618270 by E. Egorova), iodine (patent 2203228 by G. Konopleva, 2003) or other substances.

Nanosilver is a kind of high-purity colloidal biosilver with a nanometer-range particle size.

The use of nanosilver reinforces the lysozyme activity of blood serum thereby effectively boosting the human body's resistance to infections. This facilitates the recovery and rehabilitation of the human body. It has pronounced antibacterial properties. Nanosilver destroys harmful bacteria and precludes their reproduction. Hence the antiviral effect which reinforces the immune system. Food and water are a natural source of silver for the human body. Modern refined foods, however, have a silver content which is insignificant and clearly insufficient. Decreased proportions of silver in the diet are due to modern intensive technologies used to obtain and process foods. A similar fate has also befallen such microelements as biotics (selenium, zinc, copper, chromium) which are needed for health to remain full.

Microelements are biotics which are involved in biochemical and physiological processes. Bringing their levels back to normal boosts the resistance of the human body to harmful agents and factors.

Silver nanoparticles are much more efficient and safer than silver ions. Safe foods, medicines or materials containing silver nanoparticles can be created by means of obtaining aqueous solutions featuring such nanoparticles that would have high antimicrobial activity and sufficiently low toxicity to the human body at the same time. It would provide a safe use of nanoparticle solutions as an antimicrobial additive. The the recommended daily intake of silver starts at 80 micrograms. Silver ions penetrating the cytoplasmic membranes of cells disrupt the functions of the membrane and block bacterial enzymes which kills off microorganisms. Silver ions entering the body via food produce virtually no adverse effect on the beneficial microflora of the intestine and other human organs. People can imbibe silver water for many years with no harm done to the body [http://silverwater.clan.su/pub1/1-1-0-4].

### 3. Structure and content of natural elements, functional food ingredients (phytoncides).

**A functional food ingredient** is a substance or a group of substances of animal, plant, microbiological or mineral origin - substances identical to natural ones - as well as living microorganisms which are found in functional foods and can benefit one or more physiological functions, metabolic processes in the human body on the condition of regular consumption.

**Phytoncides** are volatile biologically active substances which are formed by plants. They kill off or suppress the growth and development of bacteria, viruses, microscopic fungi via inhalation. Phytoncide is also a stimulant which boosts the human immune system.

While in the Bioprocessor, the Molochko organic product blended with silver nanoparticles is coated in natural elements (phytoncides).

### Exercise of the invention

I. Structural design of the grain deep processing device.
II. Preparation of feedstock: cleaning, washing, germination of grain of cereal seeds and nuts based on our specific technique to the point at which 1-2 mm sprouts emerge.
III. Bioprocessor 1 which we have designed and developed uses knives to cut sprouted grain while nuts with water are crushed in a ratio of 1:2 at a temperature of 20-30 °C which produces the primary product - crushed organic paste-like mass that is fed by screws to Bioprocessor 2 located below.
IV. Bioprocessor 2 portions out water or an aqueous solution of an antiseptic substance (silver nanoparticles) to the crushed paste-like mass in a ratio of 1:4 at a temperature of 60-68 °C. The whole mass goes through the grindstones which yields the second product - the organic solution "Molochko" with its antimicrobial properties with press-cake (fiber and other substances) coming out separately. The moistened grain undergoes change between the grindstones of the mixture with water. When crushed in an aqueous medium, proteins and vitamins pass into water while the fiber is separated and cast out along the walls of the beam. The liquid composition yields a solution with organic nutrients and antimicrobial properties.
   Bioprocessor 2 separates the Molochko substance from the press-cake. Then the press-cake comes out of the upper part of the separator while the Molochko substance is fed to a separate container. The resulting organic solution from Bioprocessor 2 goes into Bioprocessor 3.
V. Bioprocessor 3 coats the resulting secondary product "Molochko" with natural elements (phytoncides) at a temperature of 20-30 °C. Then the third product is obtained which is a functional drink featuring antimicrobial and immunostimulating properties (a suspension) of KhNZ.

### References

[1] N.M. Alabina Development of an industrial technology for complex processing of waste for production of functional products. (Razrabotka promyshlennoy tekhnologii kompleksnoy pererabotki otkhodov dlya proizvodstva produktsii funktsional'nogo naznacheniya.) Author's abstract. VNIIKOP-Moscow, 2002.- 153 p.
[2] T.V. Alekseeva, N.N. Popova, M.I. Korystin The use of wheat germ at public catering enterprises // Food industry. - 2010. - Nº 11. (Ispol'zovaniye zarodyshey pshenitsy na predpriyatiyakh obshchestvennogo pitaniya) -pp. 36-37
[3] E.K. Baranova Structure and physico-chemical properties of radiation-generated nanostructured silver clusters and the mechanism of their bactericidal action in food media. (Struktura i fiziko-khimicheskiye svoystva radiatsionno- generirovannykh nanostruktumykh klasterov serebra i mekhanizm ikh bakteritsidnogo deystviya v pishchevykh sredakh.) Author's abstract. Mendeleev Russian University of Chemical Technology - Moscow, 2006.- 35 p.
[4] B.U. Baizhozhaeva, Theoretical and experimental validation of obtaining safe foods for general and therapeutic and preventive purposes through the application of grain and leguminous feedstock. Author's abstract. Moscow, 2003 - 48 p.
[5] RU 2031587 C1 1995
[6] M.S. Koneva Development of technology and evaluation of consumer properties of smoothies enriched with products obtained from sprouted wheat grain. (Razrabotka tekhnologii i otsenka potrebitel'skikh svoystv smuzi, obogoshchennykh produktami iz proroshchennogo zerna pshenitsy.) Thesis. Krasnodar, 2017-175 p.
[7] Ya. Musil, Fundamentals of biochemistry of pathological processes. (Osnovy biokhimii patologicheskikh protsessov.) Moscow, 2005 - 430 p.
[8] N.I. Myachikova [et al.] Germinated seeds as a source of food and biologically active substances for the human body /Modern problems of science and education. (Proroshchennyye semena kak istochnik pishchevykh i biologicheski aktivnykh veshchestv dlya organizma cheloveka /Sovremennyye problemy nauki i obrazovaniya) -2012. -No. 5. - p. 103.
[9] S.I. Ognev Amino acids, peptides and proteins. (Aminokisloty, peptidy i belki) Moscow Higher School, 2005 - 365 p. [1O] V.V. Parii Fundamentals of biochemistry (Osnovy biokhimii). - Moscow, Prosveshchenie, 2000 - 365 p.
[11] A.G. Rezvapov Protein chemistry. (Khimiya belka) Moscow, 2002 -307 p.
[12] Rosstandart. Federal State-Funded Institution "CSM Tatarstan". Test report No. 2739.

## Claims

1. The machine and methods for deep bioprocessing of grain, nuts, and phytoncides for the production of general-purpose and functional foods, which involves three-stage processing of raw materials in aquatic media and can be used to obtain an organic solution with nutrients and antimicrobial properties.

2. In the machine as per claim 1 for producing general-purpose and functional foods, the mechanism is positioned on a single frame consisting of three sections: 1) a chopper with knives and a screw; 2) mill stones; 3) a two-disk section - all this together is a prototype extractor consisting of three-stage sections with individual independent functions.

3. The method as per claim 1 for obtaining the first general-purpose product consists in processing sprouted grains or nuts in an aquatic medium in a ratio of 1:2 at a temperature of 20 - 30° C. As a result, a paste is produced with a nature-balanced content of proteins, fats, food enzymes, and a several-fold larger content of vitamins and minerals.

4. The method as per claim 3 differs in such a way that the resulting paste-like mass is further processed in the second and third sections of the machine in an aquatic medium at a temperature of 60 - 68° C in a ratio of 1:4 and then extracted in order to obtain an organic solution, which is an independent second product (milk). During the production of the latter, the protein membranes are opened.

5. The method as per claim 3 for producing the third product envisages that after processing the first product in the second section, a safe aqueous solution of silver nanoparticles having a temperature of 60 - 68° C (raw materials to water - in a ratio of 1:4), passing in the second and third sections. Eventually, we obtain a functional organic solution with nutrients, **characterized by** antimicrobial properties.

6. The method as per claim 4 for producing the fourth product is specific in such a way that phytoncides (from garlic) are added to the second organic solution in the third section at a temperature of 20 - 30° C. As a result, a new functional product is obtained that may be used to treat infections; its specific feature is that the protein particles of the organic solution are enveloped in phytoncides.

7. The method as per claim 5 and claim 6 for obtaining the fifth functional product: the second product (milk) is processed with silver nanoparticles; phytoncides are added at the third stage; the fifth product is prepared, which is a mixture that stimulates the sustainability of the body's immune system and normalizes the body's resistance to external agents and factors.

8. The method as per claim 3 and claim 7 for obtaining the sixth product differs as follows: we add raw materials to the first paste-like product (in a ratio of 1:2 to water, at a temperature of 60 - 68° C); silver nanoparticles and phytoncides are passed through three sections of the machine, and eventually, we get a functional thick consistency.
**Functional products offer the following properties:**
a) Silver ions with the product penetrate into the cytoplasmic membrane of the cell changing the functions of the membrane and blocking bacterial enzymes thereby killing off microorganisms.
b) Essential amino acids coated with phytoncides (natural antibiotics) are transported to the blood, cells and DNA molecules. Nucleotides repair DNA, remove bacteria and viruses while phytoncides and silver particles kill them off. Red blood cells remain in the blood while the product itself generates new red corpuscles which helps the body fight against bacteria and viruses. This contributes to the human immune system while also helping the gene system to work.
Volatile biologically active substances, when entering the human lungs, suppress viruses from the outside.
Note. The recipes for the aforementioned food products have been developed separately and will not be disclosed. The recipes feature products of various consistencies and shapes which can be used as independent products or as products of various functional purposes, ones that offer immunostimulating, antibacterial and antiviral properties and can be used for nutrition and prevention of diseases and infections (including coronavirus).
